(19)

**Europäisches Patentamt**

**European Patent Office**

**Office européen des brevets**

(11) **EP 4 624 028 A1**

(12) **EUROPEAN PATENT APPLICATION**

(43) Date of publication:
**01.10.2025 Bulletin 2025/40**

(21) Application number: **24167489.4**

(22) Date of filing: **28.03.2024**

(51) International Patent Classification (IPC):
**B01D 71/12** (2006.01) **B01D 67/00** (2006.01)
**B01D 69/02** (2006.01) **B01D 71/08** (2006.01)
**B01D 71/16** (2006.01)

(52) Cooperative Patent Classification (CPC):
**B01D 71/12; B01D 67/0093; B01D 69/02;**
**B01D 71/08; B01D 71/16;** B01D 2311/2626;
B01D 2325/02; B01D 2325/0212; B01D 2325/04;
B01D 2325/20; B01D 2325/30

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Sartorius Stedim Biotech GmbH**
**37079 Göttingen (DE)**

(72) Inventors:
• **Metze, Michael**
**37079 Göttingen (DE)**
• **Stegelmeier, Corinna**
**37079 Göttingen (DE)**

• **Thom, Volkmar**
**37079 Göttingen (DE)**
• **Krause, André**
**37079 Göttingen (DE)**
• **Taft, Florian**
**37079 Göttingen (DE)**
• **Schreiber, Tony**
**37079 Göttingen (DE)**
• **Ruhr, Dominik**
**37079 Göttingen (DE)**
• **Dauer, David-Raphael**
**37079 Göttingen (DE)**

(74) Representative: **Müller-Boré & Partner**
**Patentanwälte PartG mbB**
**Friedenheimer Brücke 21**
**80639 München (DE)**

(54) **POROUS POLYMER MEMBRANE**

(57) The present invention relates to a porous polymer membrane having the combination of a specific average pore diameter, a specific thickness, and a specific convective porosity. Moreover, the present invention relates to a method of manufacturing such porous polymer membrane.

Fig. 2b

**EP 4 624 028 A1**

**Description**

The present invention relates to a porous polymer membrane having the combination of a specific average pore diameter, a specific thickness, and a specific convective porosity. Moreover, the present invention relates to a method of manufacturing such porous polymer membrane.

A membrane or adsorption membrane is a selective barrier separating two phases. For fulfilling its purpose of being selective, a membrane has to be provided with pores passing from one side to the other side. In particular, such membrane can have various functions, such as size exclusion of specific substances, unspecific binding of e.g., hydrophobic substances, or specific binding of substances bearing a corresponding reactive group.

In particular, membranes may be used for membrane chromatography or chromatographic separation and purification of fluids with the help of an adsorptive material. In the context of adsorption, adsorbents are porous solids which can selectively form bonds with certain components of fluids via functional surface groups referred to as ligands or chromatographically active centers. Target substances and/or contaminants can be single molecules, associates, or particles which may be e.g., proteins or other substances of biological origin. An adsorbent can, at the same time, also carry two or more types of functional groups on its inner and outer surface. The binding of the adsorbates to the adsorbent can be reversible or irreversible.

In bind-and-elute chromatography, i.e., a fluid/mobile phase is passed over or through a stationary chromatographic phase, part of the components of the mobile phase is bound, and the remaining components of the mobile phase are filtered off or let pass. Thus, specific components are bound to the stationary phase and can be subsequently eluted to obtain said components in a purified form.

Generally, membranes achieve a pore structure depending on the production method, in which a solid polymer surrounds the pores of the membrane. Such membranes may be manufactured using various methods such as combined phase segregation and evaporation of solvents. That is, the pore structure results from a segregation process, i.e., a liquid polymer solution is applied as a thin layer onto a carrier and in a subsequent evaporation process the solvent (mixture) of the polymer is removed. Due to evaporation, the polymer becomes insoluble in the resulting solvent-reduced mixture leading to a segregation into a polymer-rich and a polymer-diminished phase. During continued evaporation, the polymer-rich phase solidifies while the polymer-diminished phase disappears due to evaporation, the process yielding a porous membrane. In general, the described process depends on various parameters, such as evaporation rate, temperature, and initial polymer concentration of the polymer solution.

Since the polymer layer is applied to a carrier, i.e., evaporation only takes place at the exposed surface of the polymer layer, temperature and composition of the layer surface are continuously changing during the above-described evaporation process. Consequently, a major challenge for achieving a symmetrical membrane in the above production method is to adjust the production in a way to ensure sufficient evaporation time in order to enable the polymer layer to adapt to the changes in temperature and composition by diffusion. Said challenge is particularly difficult to overcome for symmetrical membranes having a high thickness.

A membrane for bind-and-elute chromatography should fulfil several requirements according to the specific application of said membrane. Typically, the binding capacity of such membrane should be high while also maintaining a high flowrate of the fluid passing over or through the membrane. The binding capacity *inter alia* correlates with the inner surface of the membrane which is accessible for the fluid's components and is interrelated with the porosity of the membrane. Moreover, physical requirements for application of such membrane should also be considered, such as thickness and pressure resistance.

That is, a high binding capacity is mainly improved by the thickness of the membrane as well as by a high inner surface area, which in turn depends on the convective porosity of the membrane. On the other hand, a high flowrate is achieved by providing a membrane having a large average pore diameter. Moreover, the permeability of a membrane correlates to specific inner surfaces in a way that only one of these parameters can be optimized at the same time, i.e., increasing the specific inner surface of a membrane leads to decreased permeability (that is a lower flowrate and productivity in chromatographic applications) and increasing permeability leads to a decreased specific inner surface (that is a lower binding capacity).

However, membranes known in the prior art have only fulfilled either a large thickness, or a high convective porosity, or a large average pore diameter depending on the specific application of the membrane. The production of a membrane fulfilling a combination of the above requirements was not achieved yet due to technical challenges. Further, as described above, the permeability and specific inner surface could not be optimized both independently of each other.

Accordingly, in view of the above, the technical problem underlying the present invention is to provide a membrane which can be used as chromatographic material having a high binding capacity while a high flowrate of a fluid passing over or through the membrane can be maintained.

The solution to the above technical problems is provided by the embodiments characterized in the claims.

Accordingly, the present invention provides a porous polymer membrane which has a first main surface, a second main surface, and membrane bridges which are a solid polymer bulk material surrounding and delimiting the pores of the membrane,

> wherein the polymer is a polysaccharide,
> wherein the average pore diameter of the membrane pores in the porous polymer membrane is from 0.45 to 10.0 $\mu$m,
> wherein the porous polymer membrane has a thickness of from 150 to 1000 $\mu$m, and
> wherein the convective porosity of the porous polymer membrane is at least 65%
> wherein the porous polymer membrane shows a relationship between the permeability (P) and the specific inner surface area (Ai) as defined in the following relationship (1):

$$P(A_i) \geq (A) * e^{-A_i/(B)} + (C)$$

$$(1)$$

> wherein P is the permeability in mD, Ai is the specific inner surface area with respect to the weight of the porous polymer membrane in m$^2$/g, A is at least 835 mD, B is at least 1.10 g/m$^2$, and C is at least 14 mD.

The polymer of the porous polymer membrane is a polysaccharide. In this context, the term polysaccharide relates to polymeric compounds, wherein monosaccharide units are bound together by glycosidic linkages.

The porous polymer membrane of the present invention (hereinafter sometimes referred to merely as "polymer membrane") has a first main surface, a second main surface, and membrane bridges which are a solid polymer bulk material surrounding and delimiting the pores of the membrane. That is, the herein described membrane comprises at least two phases: a solid polymer bulk phase forming the membrane bridges and at least one second phase between the membrane bridges forming pores.

In the porous polymer membrane of the present invention, the average pore diameter of the membrane pores is from 0.45 to 10.0 $\mu$m, preferably of from 0.60 to 8.0 $\mu$m, more preferably of from 0.80 to 6.0 $\mu$m, even more preferably of from 1.0 to 5.0 $\mu$m, and most preferably of from 1.5 to 4.0 $\mu$m. In this context, the average pore diameter is determined using confocal laser scanning microscopy (CLSM). In particular, CLSM is conducted as is described for instance in Ley, A. et al. Journal of Membrane Science 564, 2018, 543-551 (page 545). Herein, the term "average" is used as relating to the mean of the pore diameter.

Further, the porous polymer membrane of the present invention has a thickness of from 150 to 1000 $\mu$m. As used herein, the term "thickness" relates to the shortest distance from the first to the second main surface of the membrane perpendicular to both surfaces. Preferably, the thickness is of from 200 to 500 $\mu$m, more preferably of from 220 to 350 $\mu$m, and most preferably of from 250 to 330 $\mu$m. Such thickness achieves a high mechanical stability of the herein described membrane and a high binding capacity per membrane, compared to thin polymer membranes.

Moreover, the convective porosity of the membrane is at least 65%. In this context, the convective porosity is the volume of the convective pores ($V_{\text{convective pores}}$) divided by the whole volume of the complete membrane ($V_{\text{complete membrane}}$), which is the sum of Vconvective pores and the volume of the polymer membrane material ($V_{\text{polymer membrane material}}$) including the optional support (which is described later). In this context, the volume of the convective pores of the membrane may be determined by inverse size exclusion chromatography as known by a person skilled in the art and shown exemplarily in a modified form in Journal of Chromatography A - J CHROMATOGR A. 731. 27-40. 10.1016/0021-9673(95)01197-8, or in the case of neutral and negatively charged membranes using the dextran blue method according to e.g., Example 14 on pages 39 to 42 of WO 2009/127285 A1, and the volume of the complete membrane may be determined by measuring the geometric thickness and dimensions and calculating the volume depending on the shape of the membrane, e.g., of a cylinder.

$$convective\ porosity = \frac{V_{convective\ pores}}{V_{complete\ membrane}}$$

with

$$V_{complete\ membrane} = V_{convective\ pores} + V_{polymer\ membrane\ material}$$

The "polymer membrane material" as used above is the polysaccharide polymer material and the (optional) support, and thus the volume of the polymer membrane material is the sum of the volume of the polysaccharide polymer material and volume of the (optional) support.

In preferred embodiments, the convective porosity is at 70%, more preferred 75%, even more preferred 80%, and most preferred at least 85%. Further, the convective porosity may be at most 90%. If the convective porosity is at least 65%, an excellent balance between flowrate of a solution through the membrane and a high inner surface area is achieved. By providing a convective porosity of at most 90%, the stability of the membrane can be ensured, which may deteriorate at very high convective porosities.

Moreover, the porous polymer membrane shows a relationship between the permeability (P) and the specific inner surface area (Ai) as defined in the following relationship (1):

$$(1)$$

$$P(A_i) \geq (A) * e^{-A_i/(B)} + (C)$$

wherein P is the permeability in mD, and Ai is the specific inner surface area with respect to the weight of the porous polymer membrane in $m^2/g$. Further, A is at least 835 mD, preferably at least 935 mD, more preferably at least 985 mD, and most preferably at least 1035 mD. B is at least 1.10 $g/m^2$, preferably at least 1.20 $g/m^2$, more preferably at least 1.25 $g/m^2$, and most preferably at least 1.30 $g/m^2$. C is at least 14 mD, preferably at least 16 mD, more preferably at least 18 mD, and most preferably at least 19 mD. The parameters A, B and C are empirical parameters.

Although the upper limit of P(Ai) is not particularly limited, the porous polymer membrane may show a relationship between the permeability (P) and the specific inner surface area (Ai) as defined in the following relationship (2):

$$(2)$$

$$P(A_i) \leq 1335mD * e^{-A_i/(1.50g/m^2)} + 24mD$$

The permeability may be determined by the following formula as is described e.g., in Ley et al. Journal of Membrane Science 564, 2018, 543-551 (page 545):

$$P[mD] = \left( v\left[\frac{cm^3}{cm^2 \cdot s}\right] * \mu[cP] * \frac{\Delta x[cm]}{\Delta p[atm]} \right) * 1000$$

wherein P represents the permeability, v represents the area-related flowrate, $\mu$ represents the viscosity of water, $\Delta x$ represents the thickness of the layer through which the flow passes, and $\Delta p$ represents the pressure difference (cf. Darcy laws). In this context, the thickness of the layer through which the flow passes may be determined using a conventional thickness meter such as J50C (Käfer, Germany). The above determination of the permeability is conducted using a 47 die-cut membrane mounted in a housing equipped with a water tank, applying 100 mbar of pressure and measuring the time, which 100 mL water require to pass through the membrane.

The porous polymer membrane has a high inner surface area and, thus, a high binding capacity of analytes. In this context, the inner surface area may be determined by the BET method known to a skilled person and as is described e.g., in Atkins, "Physikalische Chemie", 3rd edition, pp. 934-936, for instance using a Micromeritics Gemini VII and using $N_2$ as measuring gas. The determined values can be specified in units of $m^2/g$ or $m^2/mL$ normalized to the respective weight or volume of the sample.

Due to the specific combination of average pore diameter, thickness, and convective porosity, as well as fulfilling relationship (1) between the permeability and the specific inner surface area, it is advantageously possible to provide a membrane achieving a high binding capacity while also maintaining a high flowrate in chromatography.

In a specific embodiment, the porous polymer membrane of the present invention is a phase-inversion membrane. In this context, the term "phase-inversion membrane" refers to a membrane that is formed in a demixing process under conditions where a polymer becomes insoluble induced by e.g. a change of concentration, a change of temperature or a change of solvent environment. Evaporative or precipitation casting are exemplary procedures to achieve this.

Preferably, the porous polymer membrane has a permeability of from 20 to 5000 mD, more preferably of from 30 to 500 mD, even more preferably of from 50 to 350 mD, even more preferably of from 55 to 300 mD, still more preferably of from 60 to 250 mD, even more preferably of from 75 to 230 mD, and most preferably of from 100 to 200 mD. If the permeability of the membrane is in the above ranges, the membrane is characterized by a good balance between flowrate and binding capacity of analytes. Said balance is particularly excellent within the above preferred ranges.

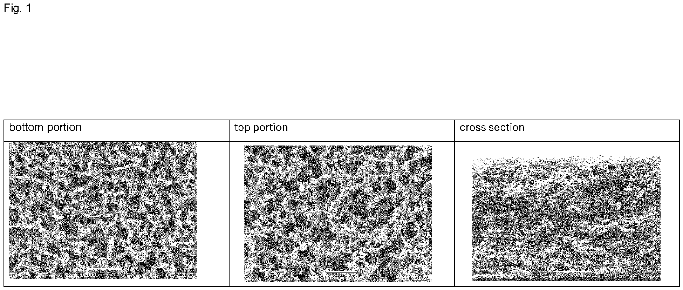

In a preferred embodiment, the porous polymer membrane of the present invention is symmetrical. That is, when the porous polymer membrane is divided from the first main surface to the second main surface in the thickness direction into a top portion, a body portion, and a bottom portion each having the same thickness, the average pore diameters of each of the top portion, the body portion, and the bottom portion do not substantially differ. Particularly, the difference in the average pore diameter of each portion may preferably not differ by more than ± 15%, more preferably by more than ± 10%, most preferably not by more than ± 5%, from the arithmetic mean of the average pore diameters of the top, body, and bottom portion. An exemplary configuration of a symmetrical membrane of the present invention is shown in Fig. 1. Here, a support structure is incorporated into the membrane. As can be seen, the general structure and the properties of the membrane bridges on both main surfaces of the membrane are very similar. Providing a symmetrical membrane ensures that the binding properties of such membrane are constant through the membrane, i.e., no distinct changes in binding properties throughout the membrane occur which results in evenly distributed bound substances during bind-and-elute chromatography applications.

With reference to the membrane bridges within the porous polymer membrane, a ratio of the average bridge length of the membrane bridges to the average bridge width of the membrane bridges is preferably from 5:1 to 7:1, and more preferably from 5.5:1 to 6.5:1 as determined using scanning electron microscopy (SEM), measuring at least 30 membrane bridges, and calculating the mean.

Further, a ratio of the average pore diameter to the average bridge width is preferably from 2.0:1 to 4.0:1, more preferably from 2.5:1 to 3.5:1, and most preferably from 3.0:1 to 3.5:1. In this context, the average pore diameter may be determined as described above and the average bridge width of the membrane bridges is determined by analysis of CLSM micrographs.

According to a specific embodiment of the present invention, the porous polymer membrane further comprises a support structure. The support structure is not particularly limited. Therefore, it is possible to use any support layer known to the skilled person from the prior art. For example, the support layer may be a nonwoven web, a woven fabric, or an open microfilter membrane. Examples of nonwoven webs are polyolefin nonwovens, such as, for example, PP/PE core-shell nonwovens and polyester nonwovens. The support layer is preferably a polyolefin nonwoven or a polyolefin membrane. Providing a support layer in the herein described membrane further improves mechanical stability of the membrane while maintaining its excellent properties regarding binding of substances, flowrate of a mobile phase, and inner surface area.

Preferably, the porous polymer membrane is a porous cellulose acetate membrane, a porous regenerated cellulose membrane, or a crosslinked cellulose membrane. That is, if the polymer is one of cellulose acetate, regenerated cellulose, or crosslinked cellulose, it is readily available in production and can be easily modified to bear chromatographically active centers useful in chromatography. In this context, cellulose acetate is a cellulose polymer which has been at least partially esterified with acetic acid. The term "regenerated cellulose membrane" relates to a cellulose membrane, in which the cellulose structure is retrieved from an esterified precursor by saponification. Further, the term "crosslinked cellulose membrane" relates to a cellulose membrane which has been crosslinked at its hydroxyl groups.

When the porous polymer membrane is a porous cellulose acetate membrane, it preferably has a degree of acetylation of from 20 to 65%, more preferably of from 30 to 55%, even more preferably of from 35 to 50%, still more preferably of from 38 to 45%, and most preferably of from 40 to 42%. In the above ranges of the degree of acetylation, the dimensions of the membrane bridges are optimized to achieve a beneficial convective porosity for improved chromatographic performance. The degree of acetylation can be determined by near-infrared (NIR) spectroscopy. In NIR spectroscopy, the dry cellulose acetate material to be measured is irradiated with electromagnetic radiation in the near-infrared spectral range, i.e., having a wavelength of from 800 to 2500 nm, and the absorption is measured. The obtained spectrum is compared with a set of spectra measured for samples of cellulose acetate of known acetyl content as specified by the supplier using the software Opus (Bruker). Here, the known acetyl content of the comparison samples lies within the estimated degree of acetylation of the cellulose acetate to be measured.

When the porous polymer membrane is a porous regenerated cellulose membrane, it preferably has a degree of saponification of at least 50%, more preferably of at least 70%, even more preferably of at least 90%, still more preferably of at least 95%, and most preferably of 100%. With a degree of saponification in the above ranges, the resulting membrane is sufficiently hydrophilic to e.g., avoid unspecific binding of hydrophobic contaminants. Further, the wetting of the membrane is enhanced, which is required for application to chromatography of biomolecules. In this context, the degree of saponification is determined by measuring the weight loss during saponification and referencing it to the sample prior to saponification thereby assuming an average degree of acetylation as is shown in Table 1 below.

Table 1. Assumed degree of acetylation in relation to the CDA/CTA ratio (cellulose diacetate / cellulose triacetate ratio) of a sample prior to saponification.

| ratio of CDA/CTA [wt/wt] | assumed degree of acetylation [%] |
|---|---|
| 50/50 | 41.6 |
| 60/40 | 41.2 |
| 70/30 | 40.8 |

(continued)

| ratio of CDA/CTA [wt/wt] | assumed degree of acetylation [%] |
|---|---|
| 80/20 | 40.4 |
| 90/10 | 40.0 |
| 100/0 | 39.6 |

Further, in a preferred case, the porous polymer membrane is a saponified and crosslinked porous cellulose acetate membrane. As used herein, the term "saponified and crosslinked porous cellulose acetate membrane" relates to a cellulose acetate membrane, which has been at least partially saponified and crosslinked. Specifically, the cellulose acetate membrane may be saponified and subsequently crosslinked at its newly formed hydroxyl groups. The cellulose acetate membrane may also be saponified and crosslinked simultaneously. Said process of saponification and crosslinking is described for instance in WO 2007/017085 A2. By providing a saponified and crosslinked membrane, a high mechanical stability of a respective membrane is achieved. Thus, e.g., swelling with water and shrinking during drying, i.e., hydration-induced volume changes, are minimized.

For the above crosslinking, a crosslinker is added to the membrane. Said crosslinker has at least two functional moieties being reactive with hydroxyl groups, e.g., as present in cellulose or regenerated cellulose. The crosslinker is not limited and may be selected by a person skilled in the art from known crosslinkers. Preferably, the crosslinker is selected from a diepoxy compound, a diisocyanate compound, epichlorohydrin, epibromohydrin, dimethylurea, dimethylethyleneurea (1,3-dimethyl-2-imidazolidinone), chlorodimethylsilane, bis(2-hydroxyethyl)sulfone, divinyl sulfone, an alkylen dihalide compound, a hydroxyalkylene dihalide, a glycidylether compound, and combinations thereof.

Further to the above, the saponified and crosslinked porous cellulose acetate membrane may be modified with chromatographically active centers, i.e., the saponified and crosslinked porous cellulose acetate membrane has chromatographically active centers attached at its saponified moieties. In case of the porous polymer membrane being a regenerated cellulose membrane or a saponified and crosslinked cellulose acetate membrane, the chromatographically active centers are preferably bound to the hydroxyl groups of the cellulose. In this context, the term "chromatographically active center" (also called "ligand") relates to a moiety bound to the polymer material, which is able to interact and/or bind with components of the solution/mobile phase that is brought into contact with the membrane.

With regard to ligands/chromatographically active centers which interact with the components of the mobile phase, mention can be made, by way of example, of ion exchangers, chelating agents and heavy metal chelates, thiophilic and hydrophobic ligands of various chain lengths and configurations, reversed-phase systems, dye ligands, affinity ligands, amino acids, coenzymes, cofactors and their analogs, substrates and their analogs, endocrine and exocrine substances, such as hormones and active ingredients acting like hormones, effectors and their analogs, enzyme substrates, enzyme inhibitors and their analogs, fatty acids, fatty acid derivatives, conjugated fatty acids and their analogs, nucleic acids, such as DNA, RNA, and their analogs and derivatives (single-, double-, and/or multistranded), and also peptide nucleic acids and their derivatives, viruses, virus particles, monomers and their analogs and derivatives, oligomers to polymers and their analogs and derivatives, high-molecular weight carbohydrates, which can be linear or branched, unsubstituted or substituted, polymeric glycoconjugates, such as heparin, amylose, chitin, chitosan, and their monomers and oligomers and derivatives and analogs thereof, lignin and its derivatives and analogs, other biochemical ligands, such as oligopeptides and polypeptides, e.g., proteins and their oligomers, multimers, subunits and also parts thereof, more particularly lectins, antibodies, fusion proteins, haptens, enzymes, and subunits and also parts thereof, structural proteins, receptors and effectors and also parts thereof, and in addition xenobiotics, pharmaceuticals and pharmaceutical active ingredients, alkaloids, antibiotics, biomimetics, etc. Further, the above ligands/chromatographically active centers, particularly ion exchangers, chelating agents and heavy metal chelates, thiophilic and hydrophobic ligands of various chain lengths and configurations, and reversed-phase systems, may also be combined for mixed mode chromatography.

Preferred examples of chromatographically active centers are ion exchangers, i.e., anionic and cationic groups such as, e.g., sulfonic acid, phosphoric acid, or carboxylic acid groups, and, e.g., quaternary ammonium groups. Said ion exchanger chromatographically active centers may also be used in combination in mixed mode chromatography. Introduction of anionic ligands enables a respective modified porous polymer membrane to bind cationic components of a solution, while allowing anionic substances to pass. On the other hand, introduction of cationic ligands enables a respective modified porous polymer membrane to bind anionic components of a solution, while allowing anionic substances to pass.

According to the present invention, there is further provided a use of the porous polymer membrane described above as an adsorption membrane, particularly as an adsorption membrane for the chromatographic separation of particles in a size e.g., of from 1 to 500 nm, particularly of from 10 to 350 nm, particularly of from 25 to 250 nm.

According to the present invention, there is further provided a method for manufacturing the above porous polymer membrane, comprising the steps of:

a) providing a polymer solution comprising at least one polymer and at least one first solvent and at least one second solvent,

b) applying the polymer solution to a surface of a carrier to form a polymer layer on the carrier, and

c) evaporating the at least one first solvent and the at least one second solvent of the polymer solution to obtain a porous polymer membrane on the carrier;

wherein the polymer is a polysaccharide, and

wherein in step b) the polymer solution is applied in a thickness of from 1000 to 2300 $\mu$m.

The features and (preferred) embodiments described above in the context of the porous polymer membrane of the present invention also apply for the manufacturing method of the porous polymer membrane of the present invention.

In principle, in the above-described method, a segregation of phases takes place. In particular, the at least one polymer is soluble in the polymer solution further comprising at least one first solvent and at least one second solvent and the solution is applied to a surface of a carrier. Then, the at least one first solvent and the at least one second solvent of the polymer solution are evaporated as is specified below and the at least one polymer becomes insoluble in the altered solvent mixture. Thus, a polymer-rich and a polymer-diminished phase form. Due to continued evaporation, the polymer-rich phase solidifies, while the polymer-diminished phase evaporates further, yielding a porous polymer membrane. The properties of the specific steps will be described further in the following.

In accordance with the present invention, in step a), a polymer solution is provided comprising at least one polymer, at least one first solvent, and at least one second solvent. Any known means for providing a respective polymer solution can be applied.

In the method of the present invention, a combination of solvents in the polymer solution in step a) is used, i.e., at least one first solvent and at least one second solvent. In this context, the at least one first solvent is preferably volatile while the at least one second solvent is preferably a so-called "non-solvent", i.e., a liquid which is unable to dissolve the at least one membrane-forming polymer.

The at least one first solvent is not particularly limited apart from preferably being volatile. In this respect, the term "volatile" means that the respective substance preferably has a boiling temperature of less than 100 °C at 1013 hPa (bp) and a vapor pressure of at least 200 hPa at 20 °C (vp). Examples of the at least one first solvent are acetone (bp 56 °C, vp 246 hPa), tetrahydrofuran (bp 65 °C, vp 170 hPa), methyl acetate (bp 57 °C, vp 228 hPa), methyl ethyl ketone (bp 80 °C, vp 105 hPa), methyl formate (bp 32 °C, vp 638 hPa), ethyl formate (bp 54 °C, vp 266 hPa), and dichloromethane (bp 40 °C, vp 470 hPa). Boiling points (bp) at 1013 hPa and vapor pressures (vp) at 20 °C are given in parentheses. Preferably, the at least one first solvent is selected from the group consisting of acetone, methyl acetate, methyl formate, ethyl formate, and dichloromethane, more preferably, the at least one first solvent is selected from the group consisting of acetone and dichloromethane. Said solvents can be used alone or in any combination. Preferably, one or two first solvents are used. The application of first solvents being volatile, such as acetone, methyl acetate, methyl formate, ethyl formate, and dichloromethane, is beneficial, due to their low viscosity leading to lower viscosities of the casting solution/polymer solution, which results to an improved processibility compared to casting solutions with higher viscosities (and same amount of solid).

The polymer solution further comprises at least one second solvent for the polymer chosen which is preferably a non-solvent. As already mentioned, the term "non-solvent" in this context refers to a liquid which is unable to dissolve the at least one membrane-forming polymer. The at least one second solvent for the at least one membrane-forming polymer (i.e., each of the membrane-forming polymers in the case of more than one polymer) preferably has a solubility under standard conditions of (in each case) at most 1 wt%, more preferably at most 0.1 wt%.

The maximum concentration of the at least one second solvent (or precipitant) is a concentration not sufficient to lead to precipitation of the at least one membrane-forming polymer. The polymer solution may only consist of the at least one first solvent, the at least one corresponding membrane-forming polymer, and at least one second solvent. The polymer solution may also consist of one first solvent, one or two membrane-forming polymer(s), and two second solvents.

Suitable second solvents are, for example, water, glycerol, methanol, ethanol, n-propanol, and iso-propanol, as well as mixtures thereof. Preferably, the at least one second solvent is water and/or ethanol, more preferably the second solvent is ethanol.

No additional machine equipment is preferably required compared to common approaches. Preferably, no toxic solvents or other substances of very high concern are used. The herein described process design further achieves reduction of production cost and a simple control of critical process parameters.

The polymer solution may comprise 2.0 to 15 wt% of the at least one (membrane-forming) polymer, 30 to 75 wt% of the at least one first solvent, and 0.1 to 55 wt% of the at least one second solvent, with respect to the total mass of the polymer solution. The content of the at least one (membrane-forming) polymer is more preferably 3.0 to 8.0 wt% and most preferably 5.0 to 7.0 wt%. The content of the at least one first solvent is preferably 35 to 70 wt%, more preferably 40 to 65 wt% with respect to the total mass of the polymer solution. The content of the at least one second solvent is preferably 25 to 50 wt%, more preferably 30 to 40 wt% with respect to the total mass of the polymer solution. In case that more than one (membrane-forming) polymer, first solvent, and/or second solvent is included in the polymer solution, the above amounts refer to the total of the respective component. By providing a polymer solution with a composition within the above ranges, a porous polymer membrane can be manufactured having an optimal balance between convective porosity, thickness, and average pore diameter, while also being highly symmetrical.

The polymer solution may further comprise one or more additives in order to improve industrial applicability in large scale. Suitable additives are, for example, swelling agents, solubilizers, hydrophilizing agents, and/or pore formers (porogens). Respective additives are known to the skilled person and are adapted to the membrane-forming polymer. For example, glycerol, triacetin, Tween 20, Tween 80, or citric acid may be used additives. Such additives may be contained in the polymer solution in an amount of 0 to 10 wt%. Preferably, such additives may be contained in the polymer solution in total in an amount of 5 wt% or less, more preferably in an amount of 3 wt% or less, most preferably in an amount of 1 wt% or less. The polymer solution may consist of the corresponding at least one membrane-forming polymer, the at least one first solvent, the at least one second solvent, and optionally one or more additives, preferably pore formers and/or swelling agents.

The polymer solution does not have to be subjected to any defined thermal pretreatments, i.e., it is not necessary to utilize a thermal pretreatment for membrane/structure formation. More particularly, the polymer solutions preferably do not have any lower critical solution temperatures in order to avoid segregation of the polymer solution prior to evaporation in the following steps.

In a preferred embodiment, the polymer solution comprises cellulose diacetate (CDA) and optionally cellulose triacetate (CTA) as polymers to obtain a porous polymer membrane which is a porous cellulose acetate membrane. That is, the polymer solution may comprise CDA as the only membrane-forming polymer, or the polymer solution may comprise both CDA and CTA as the membrane-forming polymers. Without being limiting, the polymer solution may, for instance, comprise CDA as the only membrane-forming polymer in a case of also comprising acetone as a volatile solvent. Further, the polymer solution may, for instance, comprise both CDA and CTA as membrane-forming polymers in a case of also comprising dichloromethane as a volatile solvent. By applying CDA and optionally CTA, the resulting membrane comprises a high amount of membrane bridges which have a small average membrane bridge width and a narrow distribution of membrane bridge width and length. Thus, the convective porosity of the resulting membrane can be increased.

In case a mixture of CDA and CTA is used, dependent on both the at least one first solvent and the at least one second solvent, the polymer solution preferably comprises 50 to 70 wt.% CDA and 30 to 50 wt.% CTA with respect to the total content of the polymer in the polymer solution. More preferably, the polymer solution comprises 55 to 65 wt.% CDA and 35 to 45 wt.% CTA. Most preferred is a ratio of CDA to CTA of from 65 wt.%:35 wt.% to 60 wt.%:40 wt.% in the polymer solution with respect to the total content of the polymer in the polymer solution. In particular, the contents of CDA and CTA as well as the ratio of CDA to CTA may influence the membrane bridges formed, that is, a high content of CTA typically results in broad membrane bridges (i.e., membrane bridges having a high width), while a high content of CDA results in lower volume of the membrane bridges (i.e., membrane bridges having a low width). Said parameters have a major influence on the convective porosity of the membrane.

In accordance with the present invention, in step b), the polymer solution is applied to the surface of a carrier to form a polymer layer on the carrier. Methods of applying the polymer solution are well-known in the prior art and can be used without special limitations in the method of the present invention. Such methods are, for example, methods in which the carrier is conveyed, for example, past a doctor blade system or a slot die, from which the corresponding polymer solution emerges. Step b) takes place preferably using a slot die.

In step b) the polymer solution is applied in a thickness of from 1000 to 2300 $\mu$m, preferably of from 1100 to 2000 $\mu$m, and more preferably of from 1200 to 1500 $\mu$m. Applying the polymer solution in the described thickness results in a membrane having a thickness of from 150 to 1000 $\mu$m. Here, it should be noted that a skilled person may adjust the thickness of the polymer layer to the concentration of the at least one membrane-forming polymer in the polymer solution.

In case the membrane comprises a support structure, said support structure may be provided on the polymer layer after applying the polymer solution. In that way, the polymer solution may penetrate partially or completely into the optional support structure and replace air contained in the support structure. For example, the polymer layer may penetrate into the support structure to an extent of at least 25%, preferably at least 50%, more preferably at least 75%, and most preferably to an extend of about 100% (i.e., completely). In order to obtain a highly symmetrical membrane, the penetration depth into the support structure should be within the above ranges.

The thickness of the described support structure may be, for example, from 15 to 500 $\mu$m, preferably from 35 to 300 $\mu$m, more preferably from 50 to 200 $\mu$m.

Any carrier suitable for membrane production methods from the prior art may be used. The carrier preferably has a planar surface and is inert with respect to the substances used (e.g., polymer solution and its constituents). Serving preferably as carrier is a moving belt (conveyor belt) or a drum, each preferably made of steel, or a plastic foil, whereby a continuous implementation of the method can be enabled.

Basic preparation methods known in the art are described e.g., in WO 2023/088888 A1 and EP 4 180 117 A1.

The application temperature in step b) may be from 4°C to (bp of the (lowest boiling) volatile solvent - 20% (with respect to the bp of the (lowest boiling) volatile solvent in °C)), more preferably from 4°C to (bp of the (lowest boiling) volatile solvent - 25%), and most preferably from 4°C to (bp of the (lowest boiling) volatile solvent - 30%). For example, in case the boiling point of the (lowest boiling) volatile solvent is 100°C, a range of 4°C to (bp of the (lowest boiling) volatile solvent - 20%) means a range of 4°C to (100°C - 20°C) = 4°C to 80°C. Preferably, the temperature in step b) is from 4 to 30 °C, more preferably from 10 to 20 °C. Applying the above temperature ranges achieves controlled application of the polymer solution to the carrier including an optimized viscosity of the polymer solution.

Preferably, the method of the present invention comprises only one polymer solution application step and, thus, besides step b) no further polymer solution application steps.

In accordance with the present invention, in step c), the at least one first solvent and the at least one second solvent of the polymer solution are evaporated to obtain a porous polymer membrane on the carrier. This is e.g. conducted by transporting the polymer layer from step b) through an evaporation zone for partially evaporating the at least one first solvent and the at least one second solvent, preferably under a relative humidity of less than 20 %RH. Due to the high thickness of the polymer layer, the evaporation step should preferably fulfil the following specific requirements.

The evaporation time in step c) preferably is from 10 to 45 min, more preferably from 12 to 35 min, most preferably from 15 to 30 min. When applying such an evaporation time, sufficient evaporation of the at least one volatile solvent from the polymer layer having the above-described thickness is achieved by ensuring efficient diffusion of the at least one volatile solvent through the polymer layer to the exposed surface of the layer opposite to the carrier. Moreover, a slow evaporation results in a symmetrical and uniform membrane.

The temperature in step c) may be the same as in step b) or may be higher than the temperature in step b) or may be lower than the temperature in step b). The mentioned temperatures preferably allow preventing the formation of bubbles in the membrane film which could lead to major defects. When applying such temperatures, sufficient evaporation of the at least one volatile solvent is achieved. Specifically, employing the same temperatures as in step b) ensures that the at least one volatile solvent efficiently diffuses through the polymer layer and a symmetrical membrane can be achieved.

The evaporation zone enables control of the atmosphere with respect to humidity, temperature and optionally air flow conditions. In particular, the humidity in the evaporation zone is reduced compared to the surrounding preferably to less than 20 %RH, more preferably less than 18 %RH, more preferably less than 15 %RH, more preferably less than 10 % RH, and most preferably from 0 to 5 %RH at the temperature used in step c). Typically, this may allow to avoid deteriorating effects (i.e. opening of the membrane at the top portion) caused by water diffusing into the membrane. The desired relative humidity (RH) can for example be adjusted by introducing a dry gas, preferably an inert gas such as nitrogen or carbon dioxide into the evaporation zone.

Further, the stream velocity of gases above the polymer layer may be in a range of from 0.01 to 1.0 m/s, preferably of from 0.1 to 0.5 m/s. Applying said velocity, the at least one volatile solvent can be evaporated evenly and sufficiently even at temperatures lower than the boiling point of the at least one volatile solvent, while ensuring efficient diffusion of the at least one volatile solvent through the polymer layer and the manufacturing of a symmetrical membrane.

Preferably, the above-described method further comprises a step d) of saponifying and crosslinking the porous cellulose acetate membrane to obtain a saponified and crosslinked porous cellulose acetate membrane. With regard to the saponification and crosslinking step, the above-described details with regard to a saponified and crosslinked membrane are fully applicable to the herein described method.

The method for manufacturing the porous polymer membrane may further comprise a step e) of modifying the saponified and crosslinked porous cellulose acetate membrane. For the modification step, it is referred to the above description regarding the modified porous polymer membrane.

By providing the above-described porous polymer membrane as well as the above-described method for manufacturing the porous polymer membrane, a high binding capacity of the membrane in chromatographic applications is achieved while a high flowrate of a fluid passing over or through the membrane can be maintained. Therefore, the herein described porous polymer membrane is excellently suited for application in e.g., bind-and-elute chromatography.

The Figures show:

Figure 1 shows scanning electron micrographs of both main surfaces and a cross section of a symmetrical membrane according to the present invention.

Figure 2a) shows a comparison of binding capacity of negatively charged latex particles versus membrane permeability of conventional and inventive Q-membranes according to Example 3.

Figure 2b) shows a comparison of the permeability versus the inner surface area of conventional and inventive Q-membranes according to Example 3.

Figure 3 shows the binding capacity of BSA versus flowrate of an inventive membrane modified with a primary amine ligand compared to a conventional membrane according to Example 4.

Figure 4 shows the binding capacity of BSA versus flowrate of an inventive membrane modified with a phenyl ligand compared to a conventional membrane according to Example 4.

The present invention will be further illustrated in the following examples without being limited thereto.

**Examples**

Materials

Commercially available cellulose diacetate (CDA) (Mn = 60,000 to 150,000 g/mol), degree of acetylation: 38.0 to 40.5 %

Commercially available cellulose triacetate (CTA) (Mn = 100,000 to 200,000 g/mol), degree of acetylation: 43.0 to 44.5 %

Example 1: Preparation of membranes

First, polymer solutions of cellulose diacetate and (optionally) cellulose triacetate were prepared according to the compositions shown in Table 2 at ambient temperature with either dichloromethane or acetone as volatile solvent and ethanol and/or water as nonsolvents. Subsequently, the polymer solutions were applied to a stainless-steel solid substrate in a thickness of 1400 $\mu$m at 10 °C for 25 min with a reduced stream velocity of air above the polymer layer of 0.2 m/min. In case of membrane nos. 1 and 4, a polyester fleece having a thickness of 200 to 260 $\mu$m and a surface-normed weight of 26 to 40 g/m$^2$ as a support structure was applied to the polymer layer, while membrane nos. 2 and 3 were processed without support structure. Then, the respective volatile solvent was evaporated at a temperature of 20 °C for 15 to 45 min (until the polymer layer exhibited a white appearance) with a stream velocity of air above the polymer layer of 0.5 m/s.

Table 2: Compositions of the polymer solution (all values given in wt%) and properties of the obtained membranes.

| Membrane no. | 1 | 2 | 3 | 4 |
|---|---|---|---|---|
| CDA | 5.0 | 3.8 | 4.55 | 3.85 |
| CTA | 0 | 2.5 | 1.95 | 2.55 |
| dichloromethane | 0 | 61.2 | 63.0 | 62.2 |
| acetone | 44.0 | 0 | 0 | 0 |
| ethanol | 41.0 | 27.5 | 27.5 | 27,9 |
| water | 10.0 | 5.0 | 3.0 | 3,5 |
| convective porosity [%] | 84.6 | 85.9 | 80.3 | 84.9 |
| thickness [$\mu$m] | 220 | 235 | 216 | 275 |
| average pore diameter [$\mu$m] | 1.8 ±1.1 | 1.8 ± 0.8 | 1.0 ± 0.5 | 2.8 ± 1.3 |
| average bridge diameter [$\mu$m] | 0.56 ± 0.32 | 0.57 ± 0.30 | 0.3 ± 0.21 | 0.9 ± 0.5 |
| pore/bridge | 3.2 | 3.2 | 3.3 | 3.1 |
| Permeability [mD] | 99 | 25 | 130 | 117 |
| Inner Surface [m$^2$/g] | 4.4 | 10.5 | 3.4 | 3.1 |

Each of membrane nos. 1 to 4 had an average pore diameter of from 0.45 $\mu$m to 10.0 $\mu$m, a thickness of 150 to 1000 $\mu$m, a convective porosity of at least 65% (even at least 80%), and fulfilled relationship (1).

Example 2: Symmetrical membranes

Membranes according to the present invention were prepared as described in Example 1. As mentioned above, the symmetry of the membrane was analyzed by dividing the membrane from the first main surface to the second main surface in the thickness direction into a top portion, a body portion, and a bottom portion each having the same thickness. CLSM was measured for the whole membrane and the obtained micrographs were divided into the above separate portions. The therefrom derived respective average pore diameters and average bridge widths are shown in Table 3 below, together with the values obtained for Comparative products 5 and 6 of Example 3 below.

Table 3: Average pore diameters and average bridge widths as well as their ratio of membrane nos. 5 and 6 and Comparative products 5 and 6 (cf. Example 3 below).

| | Membrane no. 5 | | | Membrane no. 6 | | |
|---|---|---|---|---|---|---|
| Portion | average pore diameter / standard deviation ($\mu$m) | average bridge width / standard deviation ($\mu$m) | average pore diameter / average bridge width | average pore diameter / standard deviation ($\mu$m) | average bridge width / standard deviation ($\mu$m) | average pore diameter / average bridge width |
| Top portion | 3.12 $\pm$ 1.62 | 0.91 $\pm$ 0.52 | 3.42 | 3.35 $\pm$ 1.77 | 0.99 $\pm$ 0.61 | 3.38 |
| Body portion | 2.95 $\pm$ 1.50 | 0.89 $\pm$ 0.46 | 3.31 | 3.28 $\pm$ 1.88 | 1.00 $\pm$ 0.63 | 3.28 |
| Bottom portion | 2.86 $\pm$ 1.24 | 0.93 $\pm$ 0.49 | 3.07 | 3.06 $\pm$ 1.90 | 0.97 $\pm$ 0.65 | 3.15 |
| Mean | **2.98** | | | **3.23** | | |
| | difference from mean (%) | | | difference from mean (%) | | |
| Top portion | 4.8 | | | 3.7 | | |
| Body portion | 0.9 | | | 1.5 | | |
| Bottom portion | 3.9 | | | 5.3 | | |
| | Comparative products 6 | | | Comparative products 5 | | |
| Portion | average pore diameter / standard deviation ($\mu$m) | average bridge width / standard deviation ($\mu$m) | average pore diamete r / average bridge width | average pore diameter / standard deviation ($\mu$m) | average bridge width / standard deviation ($\mu$m) | average pore diameter / average bridge width |
| Top portion | 7.25 $\pm$ 7.00 | 1.68 $\pm$ 0.93 | 4.3 | 3.5 $\pm$ 1.96 | 1.12 $\pm$ 0.85 | 3.1 |
| Body portion | 9.22 $\pm$ 9.89 | 1.55 $\pm$ 0.73 | 5.9 | 3.88 $\pm$ 2.42 | 0.88 $\pm$ 0.52 | 4.4 |
| Bottom portion | 4.09 $\pm$ 1.50 | 1.46 $\pm$ 0.65 | 2.8 | 4.21 $\pm$ 2.97 | 1.09 $\pm$ 0.72 | 3.9 |
| Mean | **6.85** | | | **3.86** | | |
| | difference from mean (%) | | | difference from mean (%) | | |
| Top portion | 5.8 | | | 9.4 | | |
| Body portion | 34.5 | | | 0.4 | | |
| Bottom portion | 40.3 | | | 8.9 | | |

As can be seen from the above Table 3, the average pore diameters of each of the top portion, the body portion and the bottom portion do not substantially differ for membrane nos. 5 and 6. In particular, the difference from the mean value of the average pore diameters of each portion is exceptionally low, i.e., the membranes of the present invention show

a high symmetry.

Example 3: Quaternary ammonium modification of membrane surfaces

To produce membranes suitable for chromatography and modified with a cationic ligand/chromatographically active center, cellulose acetate membranes according to the present invention (having an average pore diameter of from 0.45 to 10.0 $\mu$m, a thickness of 150 to 1000 $\mu$m, and a convective porosity of at least 65% (even at least 80%), as well as fulfilling relationship (1)) were, first, saponified and crosslinked by application of 15% 1,4-butanediol diglycidylether and 0.6% NaOH in $H_2O$ for 19 hours to obtain crosslinked, regenerated cellulose membranes. After that, said crosslinked, regenerated cellulose membranes were functionalized/modified by application of 10% trimethylamine in water to obtain Q-membranes, i.e., cationic membranes bearing quaternary ammonium sites.

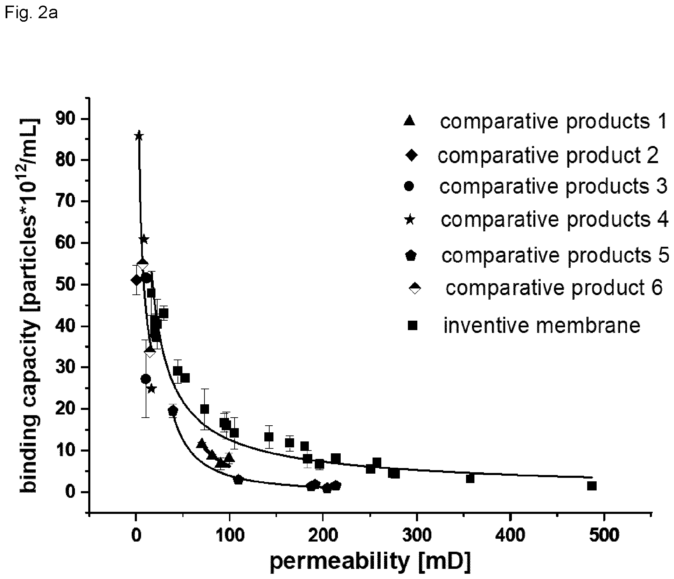

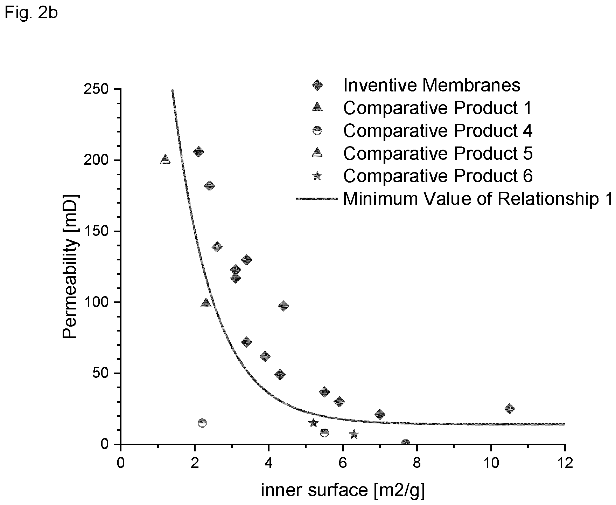

To evaluate the chromatographic applicability of the Q-membrane for the binding of negatively charged model particles (latex particles, Micromer) having a diameter of 100 nm, the binding capacity was measured and compared to commercially available Q-membranes (Sartorius Sartobind Q, Millipore Natrix-Q, Pall Mustang-Q, and BIA CIMmultus QA). The binding capacities versus the permeability of the membrane are shown in Fig. 2a) and the permeability versus the specific inner surface area are shown in Fig. 2b).

Determination of binding capacity with 100 nm PS latex particles:
A membrane sample (circular disc with d = 6 mm) was placed in a sample holder and flushed with Tris-buffer (pH 7) using a filtration apparatus by Knauer. After flushing, the sample was flowed through by a model particle suspension (100 nm latex particles) in constant flow. The breakthrough curve was detected by the solution's UV absorption signal at 200 nm and the dynamic binding capacity (i.e., number of particles per membrane volume) was derived from the filtered volume of the particle solution at a breakthrough of 10%, thereby taking into account the particle concentration (~$10^{10}$ particles/ml).

In this context and with reference to Fig. 2a, the binding capacity and the specific inner surface are related by the following equation:

$$A_i = 134 \frac{m^2}{particles * 10^{12}} * BC - 9.5 \frac{m^2}{mL}$$

wherein Ai is the specific inner surface in $m^2$/mL membrane volume and BC is the binding capacity in 100 nm particles*$10^{12}$/mL membrane volume. By the above equation, the specific inner surface can be calculated from the binding capacity as an alternative to the known BET method.

Comparative products 1: Sartorius Sartobind Q, quaternary ammonium group-modified crosslinked, regenerated cellulose membrane, thickness: 270 $\mu$m, convective porosity: 75%, nominal pore diameter: 5 $\mu$m, Permeability: 99 mD, inner surface: 2.3 $m^2$/g. Comparative products 1 do not fulfil relationship (1).

Comparative product 2: Millipore Natrix-Q, fleece with porous polyacrylamide hydrogel, thickness: 500 $\mu$m, nominal pore diameter: 0.4 $\mu$m, Permeability: 0.3 mD. Comparative products 2 are no polysaccharide membranes.

Comparative products 3: Pall Mustang-Q, hydrophilic modified polyether sulfone membrane, thickness of single layer: 175 $\mu$m, nominal pore diameter 0.8 $\mu$m, Permeability: 10 mD. Comparative products 3 are no polysaccharide membranes.

Comparative products 4: BIA CIMmultus QA, monolith of poly(glycidyl methacrylate-co-ethylene dimethacrylate), thickness: 6550 $\mu$m, nominal pore diameter 1.3 - 6.0 $\mu$m permeability (nominal pore diameter 1.3 $\mu$m): 0.5 mD, inner surface (1.3 $\mu$m): 7.7 $m^2$/g permeability (nominal pore diameter 2.0 $\mu$m): 8 mD, inner surface (2.0 $\mu$m): 5.5 $m^2$/g permeability (nominal pore diameter 6.0 $\mu$m): 15 mD, inner surface (6.0 $\mu$m): 2.2 $m^2$/g. Comparative products 4 are no polysaccharide membranes.

Comparative products 5: Sartorius quaternary ammonium group-modified crosslinked, regenerated cellulose membrane, thickness: 270 $\mu$m, convective porosity: 75%, nominal pore diameter: 5 $\mu$m Permeability: 200 mD, inner surface: 1.2 $m^2$/g. Comparative products 5 do not fulfil relationship (1).

Comparative products 6: Cytiva ST69, quaternary ammonium group-modified crosslinked, regenerated cellulose membrane, thickness: 124 $\mu$m, convective porosity: 85%, nominal pore diameter: 1.2 $\mu$m Permeability: 15 mD, inner surface: 5.2 $m^2$/g. Comparative products 5 do not have a thickness of at least 150 $\mu$m and do not fulfil relationship (1).

Inventive membranes: quaternary ammonium group modified crosslinked, regenerated cellulose membrane according to membrane no. 2 of Example 1, and having an average pore diameter of from 0.45 to 10.0 $\mu$m, a thickness of 150 to 1000 $\mu$m, and a convective porosity of at least 65% (even at least 80%), as well as fulfilling relationship (1).

As can be seen, the membranes according to the present invention either exhibit an increased binding capacity at similar permeability or higher permeability for a given binding capacity when compared to commercially available Q-membranes (cf. Fig. 2a)). Moreover, the membranes according to the present invention exhibit both an optimized permeability and specific inner surface area compared to commercially available Q-membranes (cf. Fig. 2b)).

Example 4: Chromatography membranes having a "double-porous" structure

Cellulose acetate membranes according to the present invention (having an average pore diameter of from 0.45 to 10.0 $\mu$m, a thickness of 150 to 1000 $\mu$m, and a convective porosity of at least 65% (even at least 80%), as well as fulfilling relationship (1)) were fully saponified under swelling conditions and subsequently crosslinked as is described for example in DE 10 2008 018732 B4. Due to the saponification under swelling conditions, the membrane bridges of the membrane become more porous yielding additional binding sites for small molecules such as antibodies.

Comparative membranes 7 and 8: Sartorius Sartobind STIC PA / Phenyl, amine- or phenyl-modified cellulose acetate membrane, thickness: 270 - 330 $\mu$m, convective porosity: 75%, nominal pore diameter: 1 - 2 $\mu$m, Permeability: 20 - 25 mD, specific inner surface: 3.5 - 4.0 m$^2$/g. Comparative membranes 7 and 8 do not fulfil relationship (1).

Inventive membranes: amine- or phenyl-modified cellulose acetate membrane having an average pore diameter of from 0.45 to 10.0 $\mu$m, a thickness of 150 to 1000 $\mu$m, and a convective porosity of at least 65%, as well as fulfilling relationship (1).

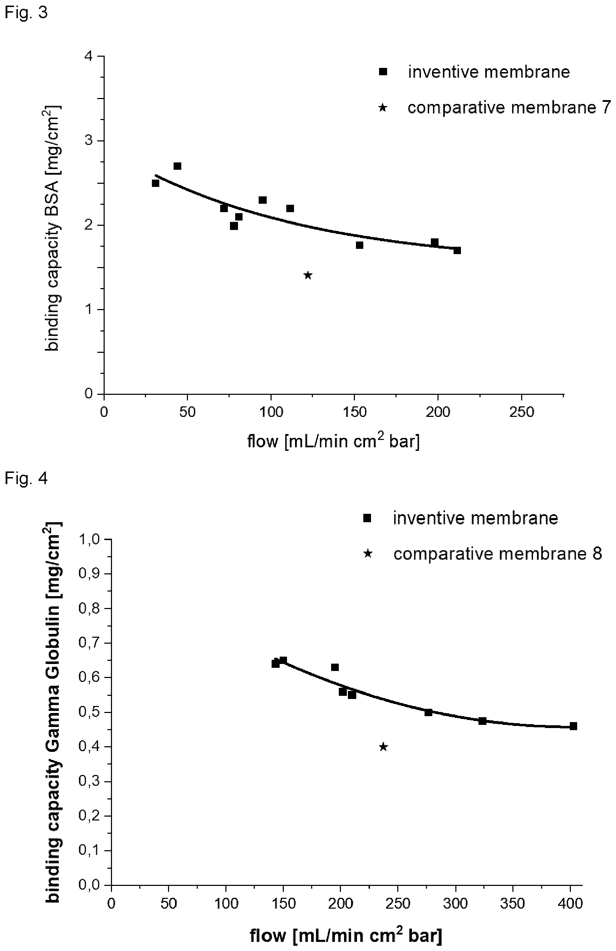

Such prepared membranes were further modified with either a primary amine ligand or a phenyl ligand as chromatographically active centers. Then, the binding capacity of bovine serum albumine (BSA) for the amine-modified cellulose acetate membrane and the binding capacity of g-globulin for the phenyl-modified cellulose acetate membrane was measured versus the flowrate of mobile phase through the membrane, as is shown in Figs. 3 and 4. In this context, the reference shown in said figures is the commercially available Sartorius Sartobind Phenyl membrane or Sartorius Sartobind STIC PA membrane, respectively, which were modified similarly.

As is evident from Figs. 3 and 4, both modified membranes of the present invention achieve higher binding capacity of BSA (amine-modified) or g-globulin (phenyl-modified) for a set flowrate or a higher flowrate for a given binding capacity compared to the commercially available membranes (Comparative membranes 7 and 8).

**Claims**

1.  A porous polymer membrane which has a first main surface, a second main surface, and membrane bridges which are a solid polymer bulk material surrounding and delimiting the pores of the membrane,

    wherein the polymer is a polysaccharide,
    wherein the average pore diameter of the membrane pores in the porous polymer membrane is from 0.45 to 10.0 $\mu$m,
    wherein the porous polymer membrane has a thickness of from 150 to 1000 $\mu$m,
    wherein the convective porosity of the porous polymer membrane is at least 65%, and
    wherein the porous polymer membrane shows a relationship between the permeability (P) and the specific inner surface area (Ai) as defined in the following relationship (1):

$$P(A_i) \geq (A) * e^{-A_i/(B)} + (C) \qquad\qquad (1)$$

    wherein P is the permeability in mD, Ai is the specific inner surface area with respect to the weight of the porous polymer membrane in m$^2$/g, A is at least 835 mD, B is at least 1.10 g/m$^2$, and C is at least 14 mD.

2.  The porous polymer membrane according to claim 1, wherein the porous polymer membrane is a porous cellulose acetate membrane, a porous regenerated cellulose membrane, or a crosslinked cellulose membrane.

3.  The porous polymer membrane according to claim 2, wherein the porous polymer membrane is a porous cellulose acetate membrane having a degree of acetylation of from 30 to 55%.

4.  The porous polymer membrane according to any one of claims 1 to 3, wherein the porous polymer membrane has a permeability of from 20 to 5000 mD.

5.  The porous polymer membrane according to any one of claims 1 to 4, wherein a ratio of the average pore diameter of the porous polymer membrane to an average bridge width of the porous polymer membrane is of from 2.0:1 to 4.0:1.

6.  The porous polymer membrane according to any one of claims 1 to 5, wherein a ratio of the average bridge length of the membrane bridges to the average bridge width of the membrane bridges is from 5:1 to 7:1.

7. The porous polymer membrane according to any one of claims 1 to 6, wherein when the porous polymer membrane is divided from the first main surface to the second main surface in the thickness direction into a top portion, a body portion, and a bottom portion each having the same thickness, the average pore diameters of each of the top portion, the body portion and the bottom portion do not substantially differ.

8. The porous polymer membrane according to any one of claims 1 to 7, wherein the convective porosity of the porous polymer membrane is at least 80%.

9. The porous polymer membrane according to any one of claims 1 to 8, further comprising a support structure.

10. The porous polymer membrane according to any one of claims 1 to 9, wherein the porous polymer membrane is a saponified and crosslinked porous cellulose acetate membrane, wherein the saponified and crosslinked porous cellulose acetate membrane preferably has chromatographically active centers attached at its saponified moieties.

11. Use of the porous polymer membrane according to any one of claims 1 to 10 as an adsorption membrane.

12. A method for manufacturing the porous polymer membrane according to any one of claims 1 to 9, comprising the steps of:

   a) providing a polymer solution comprising at least one polymer and at least one first solvent and at least one second solvent,
   b) applying the polymer solution to a surface of a carrier to form a polymer layer on the carrier, and
   c) evaporating the at least one first solvent and the at least one second solvent of the polymer solution to obtain a porous polymer membrane on the carrier;
   wherein the polymer is a polysaccharide, and
   wherein in step b) the polymer solution is applied in a thickness of from 1000 to 2300 $\mu$m.

13. The method according to claim 12, wherein in step c) the evaporating of the at least one first solvent and the at least one second solvent of the polymer solution is conducted over a duration of 15 to 45 min.

14. The method according to claim 12 or 13, wherein the polymer solution comprises cellulose diacetate and optionally cellulose triacetate to obtain a porous polymer membrane which is a porous cellulose acetate membrane.

15. The method according to claim 14, further comprising a step d) of saponifying and crosslinking the porous cellulose acetate membrane to obtain a saponified and crosslinked porous cellulose acetate membrane.

Fig. 1

| bottom portion | top portion | cross section |
| --- | --- | --- |
| | | |

Fig. 2a

Fig. 2b

Fig. 3

Fig. 4

Europäisches
Patentamt

European
Patent Office

Office européen
des brevets

# EUROPEAN SEARCH REPORT

**Application Number**

EP 24 16 7489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIANMING WANG: "Study on the Preparation of Cellulose Acetate Separation Membrane and New Adjusting Method of Pore Size", MEMBRANES, 23 December 2021 (2021-12-23), pages 1-11, XP093151940, CH ISSN: 2077-0375 | 1-9,11, 12,14 | INV. B01D71/12 B01D67/00 B01D69/02 B01D71/08 B01D71/16 |
| Y | * Section 2.2, Section 3.1.1; page 2; table 2 * <br> * abstract * | 10,15 | |
| X | CHEN Z ET AL: "Preparation and performance of cellulose acetate/polyethyleneimine blend microfiltration membranes and their applications", JOURNAL OF MEMBRANE SCIENCE, ELSEVIER BV, NL, vol. 235, no. 1-2, 1 June 2004 (2004-06-01), pages 73-86, XP004504558, ISSN: 0376-7388, DOI: 10.1016/J.MEMSCI.2004.01.024 | 1-7,9, 11-14 | |
| | | | **TECHNICAL FIELDS SEARCHED (IPC)** |
| Y | * Section 2.2.1, Section 2.2.2, Section 3.3, Section 4; figure 7a * <br> * abstract * | 10,15 | B01D |
| Y | US 2006/096912 A1 (NUSSBAUMER DIETMAR [DE] ET AL) 11 May 2006 (2006-05-11) * paragraph [0006]; claims 1, 10 * | 10,15 | |

-/--

The present search report has been drawn up for all claims

| Place of search | Date of completion of the search | Examiner |
|---|---|---|
| Munich | 19 August 2024 | Williams, Jennifer |

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 16 7489

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Sartoriusstedim: "Sartobind STIC salt-tolerant membrane chromatography", , 31 December 2010 (2010-12-31), pages 1-2, XP093151950, Retrieved from the Internet: URL:https://www.nature.com/articles/nmeth.f.319 [retrieved on 2024-04-17] * page 1 - page 2 * ----- | 10 | |

TECHNICAL FIELDS
SEARCHED      (IPC)

The present search report has been drawn up for all claims

| Place of search | Date of completion of the search | Examiner |
|---|---|---|
| Munich | 19 August 2024 | Williams, Jennifer |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 7489

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2024

| Patent document cited in search report | Publication date | Patent family member(s) | Publication date |
|---|---|---|---|
| US 2006096912 A1 | 11-05-2006 | DE 102004053787 A1 | 11-05-2006 |
| | | US 2006096912 A1 | 11-05-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009127285 A1
- WO 2007017085 A2
- WO 2023088888 A1
- EP 4180117 A1
- DE 102008018732 B4

### Non-patent literature cited in the description

- **LEY, A. et al.** *Journal of Membrane Science*, 2018, vol. 564, 543-551
- *Journal of Chromatography A - J CHROMATOGR A.*, vol. 731, 27-40
- **LEY et al.** *Journal of Membrane Science*, 2018, vol. 564, 543-551
- **ATKINS**. *Physikalische Chemie*, 934-936